# EUROPEAN PATENT APPLICATION

(11) **EP 2 338 832 A1**
(43) Date of publication of application: **29.06.2011**
(21) Application number: 10251028.6
(22) Date of filing: 03.06.2010
(51) Int. Cl.: C01B 3/38, C01B 3/48, B01J 8/04, F28F 9/20, F23M 5/00, F23M 9/00

(54) **Reformer with high durablilty**

(30) Priority: 24.12.2009 US 290144 P
(71) Applicant: Samsung SDI Co., Ltd., Gyeonggi-do (KR)
(72) Inventor: Son, in-Hyuk, Suwon-si Gyeonggi-do (KR); Shin, Woo-Cheo, Suwon-si Gyeonggi-do (KR); Choi, Jong-Rock, Suwon-si Gyeonggi-do (KR)
(74) Representative: Taor, Simon Edward William

(57) **Abstract**

Embodiments of the present invention relate to a reformer with high durability, and more particularly, the reformer with high durability according to the embodiment of the present invention includes a generator, a heating unit, a reforming unit, and a shield. The generator is generated by an oxidation reaction of reformate. The heating unit has a hollow cylindrical shape or polygonal shape and a first combustor and a second combustor that receive and oxidize heating unit fuel and anode off gas (AOG) are provided at both ends thereof. The reforming unit includes a first space formed to surround the exterior of the heating unit, a second space formed to surround the exterior of the first space, and a connector connecting the first space and the second space on the outside of the second combustor to be in fluid communication, and reforms fuel cell fuel by heat transmitted from the heating unit and supplies generated reformate to the generator. The shield is formed by a heat resistant member having a hollow cylindrical shape and is fixed onto the innermost inner peripheral surface of the connector.

The reformer with high durability according to the embodiment of the present invention can operate an environment-friendly fuel cell while ensuring the long-time lifespan by improving reforming efficiency and reliability.

## Description

### BACKGROUND

### 1. Field of the Invention

Embodiments of the present invention relate to a reformer, in particular a reformer with high durability, and more particularly, to a reformer structure that prevents breakage and damage caused due to thermal expansion.

### 2. Discussion of Related Art

As concerns about environmental pollution increase, development of alternative energy such as a fuel cell which is non-pollutive and excellent in energy efficiency, etc. is in active progress.

A fuel cell is A device that directly converts chemical energy into electric energy through electrochemical reaction of hydrogen and oxygen. Fuel cells are classified into a polyelectrolyte fuel cell, a solid oxide fuel cell, and a molten carbonate fuel cell in accordance with the electrolyte type. Hydrogen used in the polyelectrolyte fuel cell is typically acquired from reformate reforming fuel such as methanol, liquid petroleum gas (LPG), gasoline, etc. due to various difficult problems caused by storing and transporting pure hydrogen. Therefore, in most of fuel cell systems using steam reforming type reformate, a heating unit supplying heat required for steam reforming reaction is provided.

Meanwhile, reformate that remains after electrons are generated from a stack is discharged from the anode and this is referred to as anode off gas (AOG). In the related art, the AOG is combusted by using an additional catalytic combustor or mixed with atmospheric gas to be discharged by decreasing the concentration of discharge gas such as H₂, CO, and CH₄ in the AOG.

However, a worldwide environmental standard gradually shows an upward tendency and further, more positive management of the AOG is required to manufacture a fuel cell which is usable even in a room. That is, by considering that a main component of the AOG gas is hydrogen (H₂) in addition to satisfy the environmental standard in terms of atmospheric pollution through a method for combusting the AOG gas, a technological development that allows it to contribute to more positively improve the efficiency of the reformer is important.

To this purpose, a reformer that oxidizes or combusts the AOG again by returning the AOG to a heating unit of the reformer would improve thermal efficiency and suit the environmental standard. However, since the reformer shows a characteristic in which high-temperature atmosphere is maintained by oxidation of reforming fuel, heating unit fuel, and the AOG, such that a plurality of hot spots are generated, alleviation of the hot spot and distributed design are important. That is, in order to allow the reformer to operate for a long time without deterioration or damage, as described above, thermal shock caused by repetition of thermal expansion and shrinkage should be minimized through alleviation or distribution of the hot spots and deterioration and damage caused due to thermal stress should be minimized.

However, even by a method for distributing and alleviating the hot spots, since the heating unit operates at high-temperature atmosphere, it is difficult to reach a satisfactory level in terms of management of the lifespan of the reformer and a more positive protection means is required.

### SUMMARY OF THE INVENTION

According to the necessity, some embodiments of the present invention provide a means for preventing the pressure of a combustor from being increased due to deterioration by appropriately distributing points where hot spots generated by introducing anode discharge gas into a heating unit of a reformer and oxidizing are formed.

Further, some embodiments of the present invention provide a means for minimizing thermal transformation around a combustor, which is generated by high-temperature atmosphere.

In addition, some embodiments of the present invention provide a means for increasing the efficiency of a reformer by increasing combustion efficiency of discharge gas.

In order to achieve the above-mentioned aims, according to an embodiment of the present invention, a reformer with high durability includes a generator, a heating unit, a reforming unit, and a shield. The generator is generated by an oxidation reaction of reformate. The heating unit has a hollow cylindrical shape or polygonal shape and a first combustor and a second combustor that receive and oxidize heating unit fuel and anode off gas (AOG) are provided at both ends thereof. The reforming unit includes a first space formed to surround the exterior of the heating unit, a second space formed to surround the exterior of the first space, and a connector connecting the first space and the second space on the outside of the second combustor to be in fluid communication, and reforms fuel cell fuel by heat transmitted from the heating unit and supplies generated reformate to the generator. The shield is formed by a heat resistant member having a hollow cylindrical shape and is fixed onto the innermost inner peripheral surface of the connector.

Further, the shield may be fixed onto the innermost inner peripheral surface of the connector by spot welding.

Further, in the embodiment, the reformer may further include a blade that is provided on an extension line in a diameter direction on the basis of the central axis of the heating unit in the connector and fixed to the innermost outer peripheral surface of the connector and the bottom plate of the connector.

Further, a nozzle may be formed in the second combustor so that the anode off gas flows in perpendicularly to the central axis of the hating unit.

Besides, the reforming unit may perform a water gas shift (WGS) reaction in the second space.

According to configuration characteristics of the embodiment of the present invention, the reformer according to the embodiment of the present invention can prevent the pressure of a combustor from being increased due to deterioration by appropriately distributing points where hot spots generated by introducing anode discharge gas into a heating unit of a reformer and oxidizing are formed.

Further, the embodiment of the present invention can prevent neighboring components of a combustor by a difference in thermal expansion rate by forming a shield between a connector and a combustor.

In addition, the embodiment of the present invention can correspond to thermal transformation or improve thermal conductivity for a catalyst by subsidizing the rigidity of an innermost side wall of the connector through a blade.

According to an aspect of the present invention, there is provided a reformer comprising: a heating unit comprising a heating unit chamber that extends in a first direction, and a combustor arranged to receive and oxidize anode off gas; a reforming unit including a first space formed around the heating unit chamber, a second space formed around the first space, and a flow path portion arranged to connect the first space and the second space at an end of the first and second space; and a heat resistant shield attached to a surface of the flow path portion facing the combustor and located adjacent the combustor.

Preferred features of this aspect are set out in claims 2 to 13.

In addition, the embodiment of the present invention provides a means for increasing the efficiency of a reformer by increasing combustion efficiency of discharge gas.

Consequently, it is possible to operate a environmental-friendly by ensuring the long-time lifespan by improving the efficiency and reliability of the reformer.

### BRIEF DESCRIPTION OF THE DRAWINGS

The accompanying drawings, together with the specification illustrate exemplary embodiments of the present invention, and, together with the description, serve to explain the principles of the present invention.

FIG. 1 is a longitudinal cross-sectional view schematically showing a configuration of a reformer which is being developed by the applicant.

FIG. 2 is a transverse cross-sectional view schematically showing a configuration of a reformer which is being developed by the applicant.

FIG. 3 is a longitudinal cross-sectional view for describing a crack generated while developing a reformer having a dual oxidization structure.

FIG. 4a is a longitudinal cross-sectional view showing a state in which a shield is provided according to an embodiment of the present invention.

Fig 4b is a plan view showing the position of spot welding on the heat resistant shield.

FIG. 5 is an exploded perspective view for describing a shield according to an embodiment of the present invention.

FIG. 6 is a perspective view and a longitudinal cross-sectional view showing a second combustor having four nozzles per one line, which are horizontally arranged in total two lines according to an embodiment of the present invention.

FIG. 7 is a perspective view and a longitudinal cross-sectional view showing a second combustor having six nozzles per one line, which are horizontally arranged in total two lines according to an embodiment of the present invention.

FIG. 8 is a cut perspective view for showing a blade according to an embodiment of the present invention.

### DETAILED DESCRIPTION OF THE INVENTION

Hereinafter, embodiments of the present invention will be described with reference to the accompanying drawings. Terms representing directions such as 'up, down, left, and right' used in the embodiment of the present invention are based on states displayed in the drawings if particularly defined or referred.

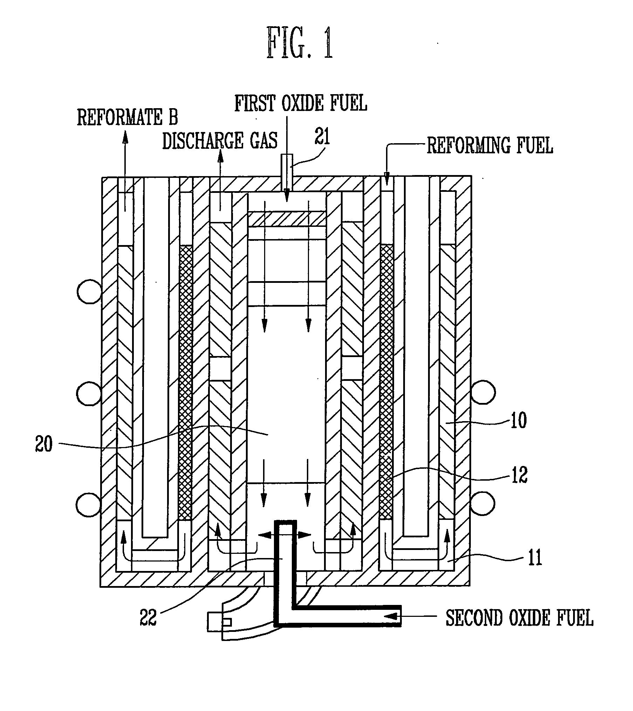

FIG. 1 schematically shows a reformer which is being presently developed by the applicant. Referring to FIG. 1, the reformer primarily includes a heating unit 20, reforming units 10, 11, and 12, a first combustor 21, and a second combustor 22. Hereinafter, the components will be described in detail.

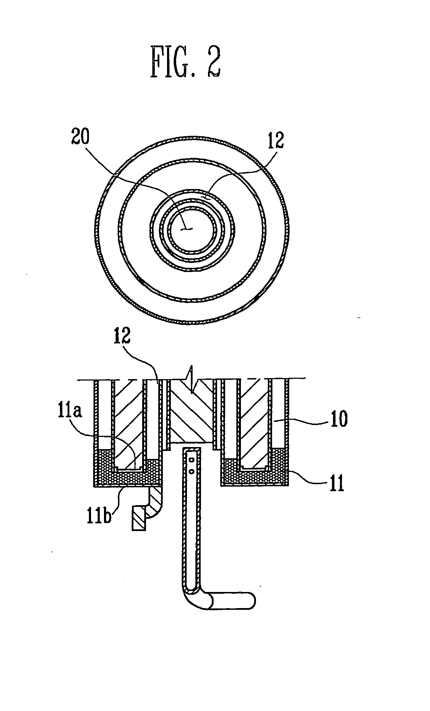

Tthe reformer has the heating unit 20 at the center thereof on the basis of a longitudinal central axis. The heating unit 20 has a hollow cylindrical shape or polygonal shape. As shown in FIG. 2, a first space 12 surrounding the heating unit 20 is provided on the outside of the heating unit 20 and a second space 10 surrounding the first space 12 is provided on the outside of the first space 12. Further, the first space 12 and the second space 10 are connected with each other by a connector 11 (that forms part of a flow path portion) on the bottoms thereof to be in fluid communication. The connector 11 is constituted by a top plate 11a and a bottom plate 11 b. The connector 11 is welded onto the bottoms of the first space 12 and the second space 10 to seal them. The connector 11 forms part of a flow path portion between the first space 12 and the second space 10.

By this structure, a thermal structure in which it is highest in temperature at the center and temperature falls outwards on the basis of the central axis of the reformer is formed to maintain uniform oxidation temperature.

Meanwhile, the first combustor 21 and the second combustor 22 that receive and oxidize heating unit fuel and anode off gas (AOG) are provided at both ends of the heating unit 20. At this time, the heating unit fuel includes primary fuel such as LPG, etc. supplied to maintain the temperature of the heating unit 20. Further, the AOG is an uncombusted gas using hydrogen discharged from an anode as a primary component after electricity is generated through an oxidation reaction in a generator (not shown) which is a composite of a fuel cell, etc. In the illustrated arrangement, the first combustor supplying and oxidizing the heating unit fuel is provided on the bottom of the heating unit 20 and the second combustor resupplying and oxidizing the AOG is provided on the bottom of the heating unit 20.

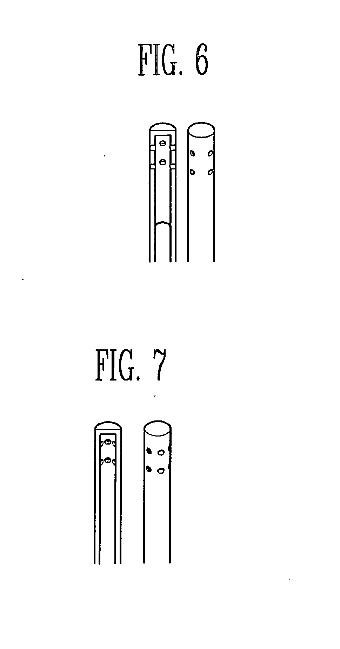

The second combustor 22 has a nozzle injecting the AOG to flow in perpendicularly to the central axis of the heating unit 20 as shown in FIGS. 6 and 7. That is, in case of the nozzle of the second combustor 22, a plurality of nozzles formed in a transverse direction maximize a mixing effect of the AOG and disables the hot spot to be concentrated on the vicinity of the first oxide catalyst layer as shown in FIG. 6.

A basic reaction of the reformer is as follows. That is, when the heating unit fuel such as LPG, etc. is supplied to the heating unit 20 to maintain temperature required for reforming, the fuel cell is reformed (SR) in the first space 12 by heat transmitted from the heating unit 20. Reformate generated at that time is supplied to the generator (not shown) with carbon monoxide reduced through WGS reactions in the connector 11 and the second space 10. Reformate (∼71% H₂, 25% CO₂, ∼1% CH₄) of 7LPM generated in the reformer produces electricity through the generator such as the stack and thereafter, the generation amount of remaining reformate (∼47% H₂, ∼45% CO₂, ∼1% CH₄, N₂ balance) is approximately 4.3LPM. That is, in case of the embodiment by the applicant, hydrogen of approximately 3 SLPM of hydrogen having a generation amount of approximately 5 SLPM is used to generate electricity and hydrogen of 2 SLPM remains as remaining gas, that is, the AOG. The AOG generated as described above is supplied into the heating unit 20 through the second combustor 22 and thereafter, is primarily oxidized and converted into heat.

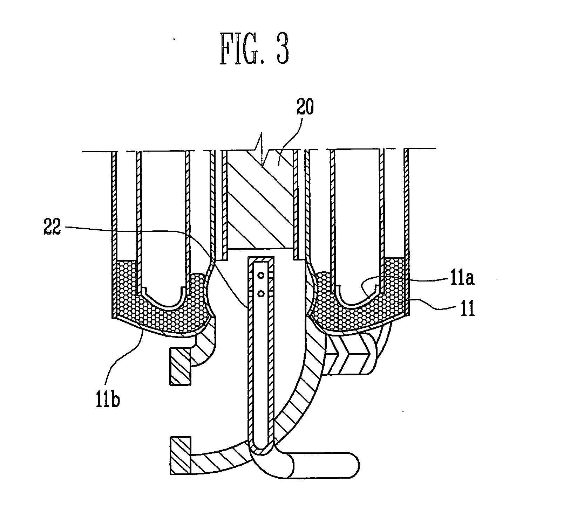

A test operation evaluating the hot spots and an influence on peripheral devices by the AOG has been performed while developing the reformer. As a result, as shown in FIG. 3, the bottom of the inner peripheral surface of the first space 12 is transformed by thermal expansion at high-temperature atmosphere. At this time, the top plate 11a and the bottom plate 11b of the connector 11 constraints the transformation by the thermal expansion to be strongly stressed. Thereafter, the top plate 11a and the bottom plate 11b are simultaneously transformed by high temperature or welding parts to the first space are damaged during the transformation. The thermal strength (the amount and concentration of hydrogen in the AOG), a thermal shock condition by a reformer operation (on-off) logic and characteristics of a material of SUS steel configuring the reformer influences the transformation strength.

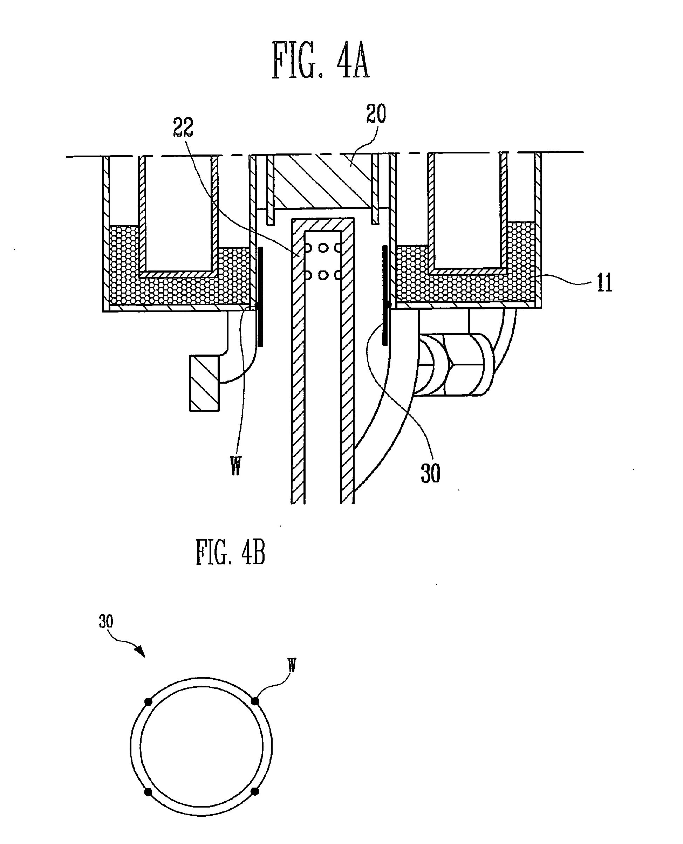

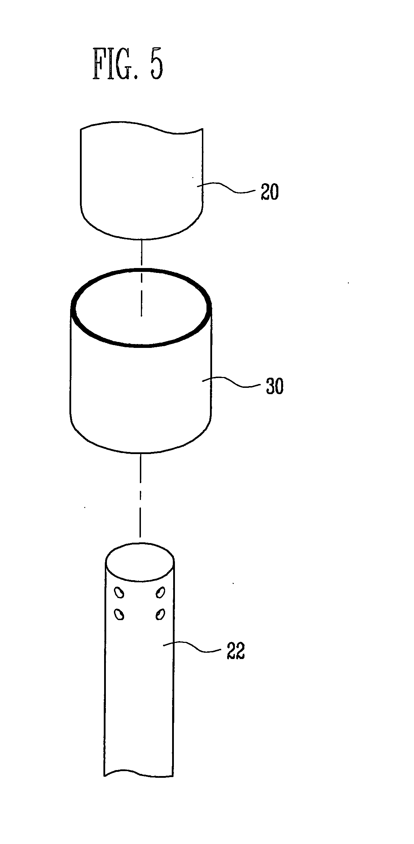

Some embodiments of the invention address this problem through structural reinforcement of the thermal transformation. That is, as shown in FIGS. 4 and 5, a shield 30 is provided. In the shield 30, a heat resistant member comparatively resistant heat, such as SUS 310 is formed in a hollow cylindrical shape and is fixed to the inner peripheral surface of the innermost wall of the connector 11.

The shield 30 and the innermost wall of the connector 11 are preferably fixed by spot welding to be expanded with a predetermined degree of freedom even in thermal expansion.

Fig 4b is a plan view showing the position of the spot welding on the heat resistant shield. For example, as shown in Fig 4b, a spot welding is performed on the several position of the peripheral surface of the heat resistant shield. When, the shield is heated, the shield can be expanded up and down from the welding position so as to decrease the thermal stress. Furthermore, it is preferred to weld on the peripheral surface of the shield uniformly due to distribute the effect of thermal expansion uniformly.

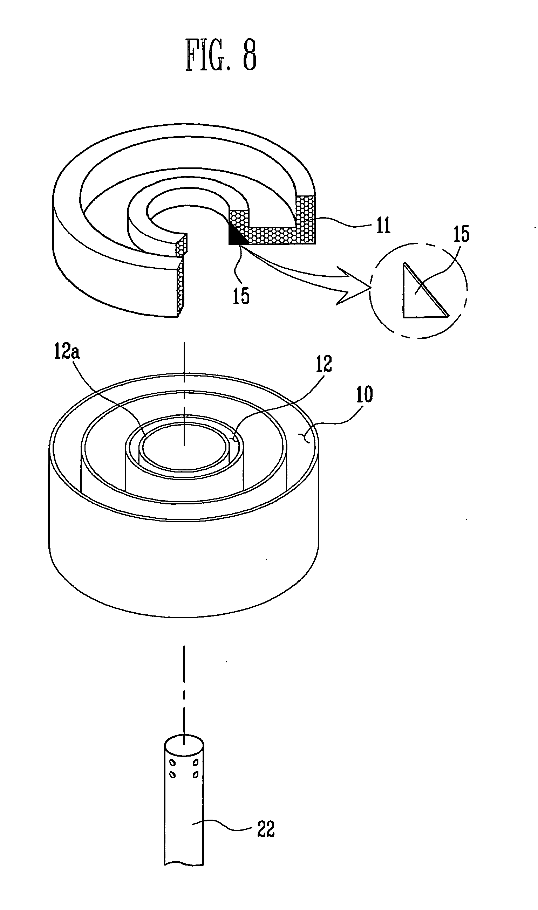

A blade 15 may be further provided as shown in FIG. 8 in addition to the shield 30. FIG. 8 is a perspective view independently decomposing and cutting the catalyst layer in the connector 11 for describing an attachment position of the blade. The blade 15 as a member having a plane shape is a structure that positively prevents the innermost wall of the connector 11 from being transformed by the thermal expansion by fixing the bottom of the outer peripheral surface of the innermost wall of the connector 11 and the bottom plate 11b of the connector 11. The blade 15 is provided in plural to prevent the innermost wall of the connector 11 from being transformed by the thermal expansion and more efficiently transmit the heat to the catalyst. At this time, the blade 15 is preferably provided on an extension line in a substantial direction of the thermal expansion, that is, a diameter direction on the basis of the central axis of the heating unit 20 to efficiently support the innermost wall of the connector 11.

As described above, Figure 4A shows a reformer comprising: a heating unit comprising a heating unit chamber that extends in a first direction, and a combustor (second combustor 22) arranged to receive and oxidize anode off gas. A reforming unit including a first space is formed around the heating unit chamber, and a second space is formed around the first space. A flow path portion arranged to connect the first space and the second space at an end of the first and second space is also provided in part by the connector 11.

Here the "flow path portion" refers to the region of the reforming unit that connects the first space and the second space at an end of the first and second space. Thus, the flow path portion is a region that can extend in the first direction (the extension direction of the heating unit chamber), as well as in a second direction between the first space and the second space. In other words, the "flow path portion" can refer to the end region of the first and second spaces and the connecting region between the first and second spaces.

As shown in Figure 4A, a heat resistant shield is provided that is attached to a surface of the reformer facing the combustor and located adjacent the combustor. As a result, in some embodiments, the heat resistant shield is arranged to protect the surrounding region of the reformer from heat from the combustor. In other words, in some embodiments of the invention the heat resistant shield is arranged to protect the reformer, and in particular the flow path portion, from heat from the combustor. In some embodiments, the heat resistant shield is attached to a surface of the flow path portion facing the combustor and located adjacent the combustor.

By providing such a heat resistant shield, reformers according to such embodiments of the invention can have high durability. It will be appreciated that a combustor (second combustor 22) arranged to receive and oxidize anode off gas will be associated with high temperature. These high temperatures will act to cause high thermal expansion of the reformer materials in the region of the combustor. To avoid the thermal damage of the type illustrated in Figure 3, such embodiments of the invention provide a heat resistant shield arranged to protect the reformer from heat from the combustor. Hence, instead of the warping of the material shown in Figure 3 is avoided. Hence, such embodiments can withstand repeated cycles of heating associated with using the reformer for long periods. Hence, such embodiments have a high durability.

In other words, such heat resistant shields as described above, enable the reformer to operate for a long time without deterioration or damage.

In some embodiments of the invention, the heat resistant shield extends in the first direction, and the heat resistant shield is fixed to the surface of the flow path portion facing the combustor at least one point such that the heat resistant shield can expand in the first direction as a result from heat from the combustor. Therefore, in such embodiments, the heat resistant shield can protect the reformer, and in particular the flow path portion, from heat from the combustor by expanding in the first direction. This controlled thermal expansion can be effective at protecting the reformer from heat from the combustor.

In some embodiments, such as that shown in Figure 4B, the heat resistant shield is attached to the surface of the flow path portion facing the combustor by at least one spot weld, for example by a plurality of spot welds arranged along a line that extends in a circumferential direction around the combustor.

In other words, by fixing the heat resistant shield to a surface of the flow path portion facing the combustor at one or a series of points, the heat resistant shield is free to expand thermally in the first direction. Hence, the heat resistant shield can effectively protect the flow path portion of the reformer (i.e. the end region of the first and second spaces).

In some embodiments, the heat resistant shield is formed around the combustor, optionally with a hollow cylindrical shape. In some embodiments, the flow path portion is located adjacent the combustor, and the heat resistant shield is located between the flow path portion and the combustor.

In the embodiment shown in Figure 4A, the flow path portion comprises a first surface and a second surface that extend at least partially in a second direction that intersects with the first direction, and in some embodiments the second surface forms an end portion of the reformer.

As shown in Figure 4A, the heat resistant shield may be attached to the surface of the flow path portion facing the combustor at a corner region of the flow path portion. For example, as shown in Figure 4A, the first space is defined by two walls, the inner of which faces the combustor. The end region of this inner wall forms part of the flow path portion, and the heat resistant shield is attached to the reformer at the corner region where the inner wall joins the second surface that forms an end portion of the reformer. In other words, the heat resistant shield is attached to the reformer at the inner corner of the flow path region of the reformer. In other embodiments, the heat resistant shield can be attached to the reformer at other positions on the inner wall that faces the combustor.

In some embodiments, the flow path portion further comprises a member configured to protect the flow path portion from being distorted by thermal expansion. Such a member is illustrated as the blade 15 in Figure 8. Such members can contact the surface of the flow path portion facing the combustor and the second surface of the connector. In other words, such members can be attached to the reformer at the inner corner of the flow path region of the reformer. In some embodiments, the heat resistant shield can be attached to the member, or the heat resistant shield could be attached to a different part of the flow path portion of the reformer.

In the illustrated embodiments, the reformer comprises a combustor (second combustor 22) arranged to receive and oxidize anode off gas, and another combustor (first combustor 21) arranged to receive and oxidize heating unit fuel. In some embodiments, the combustor is located at a first end of the heating unit chamber and the second combustor is located at an opposite end of the heating unit chamber. In other embodiments, there may be a single combustor.

In the illustrated embodiments, the combustor arranged to receive and oxidize anode off comprises at least one nozzle arranged to supply the anode off gas to the heating unit chamber in a direction that intersects with the first direction, optionally in a direction perpendicular to the first direction. This is shown in Figures 6 and 7. It will be appreciated that other embodiments of the invention could use different combustor nozzle arrangements.

While the present invention has been described in connection with certain exemplary embodiments, it is to be understood that the invention is not limited to the disclosed embodiments, but, the present invention may be implemented by various reformers without departing from the scope of invention as defined in the the appended claims and-equivalents thereof.

## Claims

1. A reformer comprising:
a heating unit comprising a heating unit chamber that extends in a first direction, and a combustor arranged to receive and oxidize anode off gas;
a reforming unit including a first space formed around the heating unit chamber, a second space formed around the first space, and a flow path portion arranged to connect the first space and the second space at an end region of the first and second space; and
a heat resistant shield attached to a surface of the flow path portion facing the combustor and located adjacent the combustor.

2. A reformer according to Claim 1, wherein the heat resistant shield extends in the first direction, and the heat resistant shield is fixed to the surface of the flow path portion facing the combustor at least one point such that the heat resistant shield can expand in the first direction as a result from heat from the combustor.

3. A reformer according to Claim 1 or 2, wherein the heat resistant shield is attached to the surface of the flow path portion facing the combustor by at least one spot weld, optionally by a plurality of spot welds arranged along a line that extends in a circumferential direction around the combustor.

4. A reformer according to any one of Claims 1 to 3, wherein the heat resistant shield is formed around the combustor, optionally with a hollow cylindrical shape.

5. A reformer according to any one of Claims 1 to 4, wherein the flow path portion is located adjacent the combustor, and the heat resistant shield is located between the flow path portion and the combustor.

6. A reformer according to any one of Claims 1 to 5, wherein the flow path portion comprises a first surface and a second surface that extend at least partially in a second direction that intersects with the first direction, the second surface forming an end of the reformer.

7. A reformer according to any one of Claims 1 to 6, wherein the flow path portion further comprises a member configured to protect the flow path portion from being distorted by thermal expansion.

8. A reformer according to Claims 6 and 7, wherein the member contacts the surface of the flow path portion facing the combustor and the second surface of the connector.

9. A reformer according to any one of Claims 1 to 8, wherein the heating unit is arranged to receive and oxidize heating unit fuel and anode off gas.

10. A reformer according to any one of Claims 1 to 9, wherein the combustor comprises at least one nozzle arranged to supply the anode off gas to the heating unit chamber in a direction that intersects with the first direction, optionally in a direction perpendicular to the first direction.

11. A reformer according to any one of Claims 1 to 10, wherein the heating unit comprises a second combustor arranged to receive and oxidize heating unit fuel.

12. A reformer according to Claim 11, wherein the combustor is located at a first end of the heating unit chamber and the second combustor is located at an opposite end of the heating unit chamber.

13. A reformer according to any one of Claims 1 to 14, wherein:
the reforming unit is arranged to reform fuel by a steam reforming reaction in the first space; and/or
wherein the reforming unit is arranged to perform a water gas switching reaction in the second space.
